# FASCICULE DE BREVET EUROPEEN

(11) **EP 4 396 598 B1**
(45) Date de publication et mention de la délivrance du brevet: **04.11.2026**
(21) Numéro de dépôt: 22772943.1
(22) Date de dépôt: 02.09.2022
(51) Int. Cl.: G01S 7/02, G01S 7/03, G01S 13/931

(54) **SYSTÈME RADAR POUR VÉHICULE À ÉLECTRONIQUE DÉPORTÉE**
RADARSYSTEM FÜR EIN FAHRZEUG MIT FERNELEKTRONIK
RADAR SYSTEM FOR A VEHICLE WITH REMOTE ELECTRONICS

(30) Priorité: 03.09.2021 FR 2109251
(43) Date de publication de la demande: 10.07.2024
(73) Titulaire: OPmobility SE, 69007 Lyon (FR)
(72) Inventeur: BANCELIN, Mathieu, 01150 SAINTE-JULIE (FR); ROCHEBLAVE, Laurent, 01150 SAINTE-JULIE (FR); STABLO, Frédéric, 01150 SAINTE-JULIE (FR)
(74) Mandataire: LLR
(86) Numéro de dépôt international: PCT/EP2022/074488
(87) Numéro de publication internationale: WO 2023/031416

(56) Documents cités:
- EP-A1- 3 734 749
- WO-A1-2020/043633
- US-A1- 2016 240 907
- US-A1- 2018 210 079

## Description

La présente invention concerne le domaine des véhicules à moteur, par exemple des véhicules automobiles, équipés d'un système radar pour émettre et/ou recevoir une onde électromagnétique dans une direction souhaitée, notamment pour détecter un obstacle.

On connaît des véhicules automobiles équipés de dispositifs de type radar, généralement positionnés sur les pare-chocs avant et arrière du véhicule. Ces dispositifs radars sont utilisés pour l'assistance au stationnement mais également pour l'assistance à la conduite, par exemple pour les applications de régulation de la vitesse des véhicules en fonction du trafic mieux connues sous le sigle anglo-saxon ACC (« Adaptative Cruise Control ») dans lesquelles le dispositif radar détecte la vitesse et la distance d'un véhicule précédant le véhicule porteur du dispositif radar. Un tel radar sert en particulier à réguler la vitesse des véhicules en fonction du trafic et/ou d'obstacles sur la route. Le radar détecte la vitesse et la distance de l'objet précédant le véhicule porteur, de façon à maintenir notamment une distance de sécurité entre les véhicules.

De façon générale, un domaine important des applications de radars de l'industrie automobile est celui de la carrosserie des véhicules dans laquelle on intègre de plus en plus de modules radars pour permettre la détection périphérique totale autour du véhicule, par exemple pour des équipements tels que des systèmes d'assistance aux manoeuvres de parking, des systèmes d'assistance de recul ou des installations de protection des piétons ou autres systèmes de ce type. Cependant ces différents radars sont de types différents suivant leur champ de détection (longue ou courte distance, détection frontale ou latérale, ...) et leur fonction (parking, conduite autonome ...) mais aussi suivant leur fabricant, ce qui ne leur permet pas de pouvoir consolider de façon optimale les données fournies par chacun indépendamment aux divers équipements du véhicule qui peuvent les exploiter (freinage, direction, phares, alarmes sonores ou visuelles ...).

Ainsi, afin de mieux caractériser l'environnement périphérique du véhicule, les constructeurs automobiles ont besoin de dispositifs permettant d'améliorer, d'une part, la taille du volume à surveiller autour du véhicule, et d'autre part, la résolution du traitement des informations issues de ces dispositifs. Ceci, afin que le véhicule interagisse au mieux, c'est-à-dire avec plus de précision et plus rapidement, avec son environnement, pour notamment, éviter des accidents, faciliter les manoeuvres et rouler de façon autonome.

Afin d'augmenter la détection périphérique en volume (3D) autour du véhicule, les constructeurs automobiles sont amenés à multiplier le nombre de radars distribués sur une surface donnée.

Cependant, l'augmentation du nombre de radars utilisés, engendre une augmentation du coût.

De plus, l'augmentation du nombre de radars nécessite d'alimenter en continu de nombreuses pistes radiofréquences, ce qui consomme beaucoup d'énergie, ce qui est très préjudiciable notamment pour des véhicules autonomes et/ou électriques.

Par ailleurs, même si les radars peuvent être un peu miniaturisés, l'augmentation du nombre de radars distribués sur une surface donnée peut être difficile à réaliser du fait de la surface disponible limitée (la taille des pièces de carrosserie ne peut être augmentée) ainsi que la présence d'autres équipements, d'autant plus qu'il peut être nécessaire de conserver une distance minimale entre chaque radar pour éviter qu'ils n'interfèrent entre eux.

Pour obtenir des informations supplémentaires relatives à la position et à la vitesse d'un obstacle données par les radars, on recherche des dispositifs ayant notamment une résolution spatiale accrue permettant par exemple de reconnaitre les objets (environnement ou obstacles) entourant le véhicule, de suivre leur trajectoire, d'en constituer une imagerie la plus complète possible.

Ainsi, les véhicules s'équipent de plus en plus de dispositifs complémentaires aux radars, tels que des LIDAR et des caméras.

La résolution spatiale exprime la capacité d'un dispositif d'observation à distinguer les détails. Elle peut être caractérisée notamment par la distance minimale qui doit séparer deux points contigus pour qu'ils soient correctement discernés.

Dans le cas d'un radar, cette distance de résolution est fonction du rapport entre la longueur d'onde de l'onde utilisée pour l'observation, et la taille de l'ouverture du dispositif d'observation. Ainsi, pour améliorer la résolution spatiale, c'est-à-dire diminuer la distance de résolution, il est nécessaire de diminuer la longueur d'onde (augmenter la fréquence de l'onde) et/ou nécessaire d'augmenter l'ouverture du dispositif d'observation. En effet, la résolution spatiale R est caractérisée par l'équation suivante : $R = \frac{c ∗ L}{f ∗ O}$ avec *c* la vitesse de la lumière, *L* la distance entre le dispositif d'observation et la cible, *f* la fréquence du radar et *O* l'ouverture du dispositif d'observation.

C'est la raison pour laquelle on cherche aujourd'hui à utiliser des radars fonctionnant à plus haute fréquence, par exemple à 77GhZ au lieu de 24GHz.

Et au contraire, la miniaturisation des radars actuels conduit à réduire leur ouverture donc leur résolution.

Par ailleurs, un problème rencontré pour un radar porté par une pièce de carrosserie concerne le positionnement du radar. En effet, il est important de pouvoir assurer l'intégrité d'un radar, afin qu'il remplisse sa fonction correctement, même en cas de déformation de la pièce de carrosserie le portant (choc, dilatation thermique, ...). Il est donc nécessaire d'assurer un bon positionnement du radar (direction d'émission/réception maintenue) pendant toute la durée d'utilisation de la fonction radar.

Il convient donc de fournir une solution permettant de fournir la position et la vitesse des objets situés autour du véhicule et d'obtenir une portée et une résolution spatiale plus adaptées, tout en limitant le coût et la consommation énergétique du dispositif de détection. Cela permet d'améliorer la détection d'objets ou de personnes autour du véhicule et de faciliter l'implantation de tels systèmes dans des véhicules autonomes, notamment des véhicules électriques dont la consommation doit être limitée au maximum.

Par ailleurs, quel que soit le type de radar porté par une pièce de carrosserie, un problème rencontré concerne la vulnérabilité aux chocs des composants électroniques. En effet, lors d'un choc déformant la paroi portant le radar, il y a un risque d'endommagement des composants, tels que l'unité électronique portant notamment l'émetteur-récepteur des ondes radar et leur électronique de contrôle, rendant inapte la fonction radar. Or le remplacement de ces composants est couteux.

Les documents WO 2020/043633 A1, EP 3 734 749 A1 et US 2018/210079 A1 divulguent des systèmes de détection radar pour véhicules automobiles.

L'invention a notamment pour but de remédier à ces inconvénients, en fournissant un système radar comportant une unité électronique et une antenne directive, l'unité électronique étant dissociée de l'antenne directive, afin de pouvoir être déportée dans une zone du véhicule moins soumise au choc que celle portant l'antenne directive.

À cet effet l'invention a pour objet un système radar pour véhicule à moteur comprenant:
- au moins une antenne directive constituée d'un boitier comportant un volume intérieur formant une cavité réfléchissante pour ondes électromagnétiques, le volume intérieur comportant une métasurface configurée pour transmettre des ondes électromagnétiques avec une direction privilégiée ;
- une unité électronique située en dehors et à distance du boitier, comprenant un émetteur primaire et un récepteur primaire d'ondes électromagnétiques ;
- au moins un guide d'ondes pour propager des ondes électromagnétiques entre l'émetteur primaire et la cavité et entre la cavité et le récepteur primaire.

Selon l'invention :
- le système radar comporte :
   ∘ un premier guide d'ondes pour propager des ondes électromagnétiques entre l'émetteur primaire et la cavité ; et
   ∘ un second guide d'ondes pour propager des ondes électromagnétiques entre la cavité et le récepteur primaire.
- le système radar comporte :
   ∘ Au moins une première antenne directive formant un élément émetteur constitué d'un boitier formant une cavité munie d'une métasurface configurée pour réfléchir des ondes électromagnétiques issue d'un premier guide d'ondes dans une direction privilégiée vers l'extérieur du boitier ;
   ∘ Au moins une seconde antenne directive formant un élément récepteur constitué d'un boitier formant une cavité munie d'une métasurface configurée pour réfléchir des ondes électromagnétiques dans une direction privilégiée vers le second guide d'ondes.

Grâce à la dissociation entre l'unité électronique et l'antenne directive d'une part, et grâce à la configuration permettant de déporter l'unité électronique de l'antenne directive d'autre part, il est ainsi possible de positionner l'antenne directive dans une zone du véhicule permettant d'imager correctement l'environnement du véhicule, tout en positionnant l'unité électronique dans une zone moins soumise aux chocs.

De façon connue des spécialistes, une zone moins soumise aux chocs est une zone qui dépend de la pièce de carrosserie sur laquelle est installée le système radar. Par exemple, pour un pare-chocs, une zone moins soumise aux chocs, peut être une zone en retrait de la peau extérieure, et/ou une zone déportée latéralement (vers les ailes) par rapport au véhicule et/ou une zone déportée verticalement (par exemple plus basse que l'antenne directive). Plus précisément, lors d'un choc, les déformations occasionnant des dégâts sur un véhicule se mesurent à partir de la face extérieure du pare-chocs et suivant une côte longitudinale appelée intrusion. Ces intrusions sont fonctions de la masse du véhicule ou de l'impacteur qui vient le heurter selon le protocole et de sa vitesse. La zone moins soumise aux chocs peut être définie en fonction de l'intrusion.

Suivant d'autres caractéristiques optionnelles du système radar, prises seules ou en combinaison :
- l'unité électronique comporte une électronique de contrôle des émetteurs et récepteurs primaires, et une électronique de commande de la métasurface.
- le guide d'onde est monté fixe sur le boitier et de façon amovible sur l'unité électronique, ou le guide d'onde est monté fixe sur l'unité électronique et de façon amovible sur le boitier.
- l'unité électronique est configurée pour opérer à des fréquences supérieures à 60GHz, notamment entre 75 et 80GHz, de préférence à 77GHz.

L'invention concerne aussi une pièce de carrosserie, comportant un système radar selon l'invention, le boitier étant rapporté sur une première zone de la pièce de carrosserie, et l'unité électronique étant rapportée sur une seconde zone de la pièce de carrosserie.

Suivant d'autres caractéristiques optionnelles de la pièce de carrosserie, prises seules ou en combinaison :
- la seconde zone est une zone moins exposée aux chocs que la première zone en cas de choc sur la pièce de carrosserie, et de préférence dans une zone hors du volume d'intrusion aux chocs.
- la seconde zone est située sur un élément structurel, tel qu'une poutre ou un longeron.
- la seconde zone est une zone déportée latéralement et/ou une zone déportée verticalement par rapport à la première zone, et/ou une zone plus en retrait que la première zone.
- le boitier est rapporté sur une première zone de la pièce de carrosserie, et l'unité électronique est rapportée sur un élément amortissant, déformable ou fusible au niveau de la seconde zone de la pièce de carrosserie.
- le boitier et l'unité électronique sont à une distance comprise entre 5 cm et 20 cm.

L'invention concerne aussi un ensemble de pièces de véhicule, comprenant un système radar selon l'invention, et le boitier est rapporté sur une première pièce de carrosserie, et l'unité électronique est rapportée sur une seconde pièce, la seconde pièce étant moins exposée aux chocs que la première pièce en cas de choc sur la première pièce de carrosserie, et de préférence dans une pièce hors du volume d'intrusion aux chocs.

Suivant d'autres caractéristiques optionnelles de l'ensemble, prises seules ou en combinaison :
- la seconde pièce est située derrière un élément structurel, ou constitue une pièce structurelle.
- la seconde pièce est choisie parmi les pièces suivantes :
   ∘ renfort de crosse, grille d'entrée d'air, convergent inférieur, armature de choc, absorbeur, guide d'air d'un radiateur ;
   ∘ face avant technique, par exemple sur une traverse supérieure ou sur autre partie du cadre, support d'aile, coffre avant.
- l'ensemble comporte une pièce portant l'unité électronique, et au moins deux autres pièces portant chacune au moins un boitier connecté à l'unité électronique.

L'invention concerne aussi un véhicule à moteur comprenant un système radar selon l'invention, ainsi qu'un véhicule à moteur comprenant une pièce de carrosserie selon l'invention, et un véhicule à moteur comprenant un ensemble de pièces de véhicule selon l'invention.

### Brève description des figures

L'invention sera mieux comprise à la lecture de la description qui va suivre donnée uniquement à titre d'exemple et faite en se référant aux dessins annexés dans lesquels :
[Fig. 1] la figure 1 illustre un exemple de véhicule automobile équipé d'un exemple de système radar selon l'invention.
[Fig. 2] la figure 2 illustre en détail un exemple de système radar selon l'invention.
[Fig. 3] la figure 3 illustre un exemple dans lequel le système radar comprend un premier guide d'ondes pour propager des ondes électromagnétiques entre l'émetteur primaire et la cavité, et un second guide d'ondes pour propager des ondes électromagnétiques entre la cavité et le récepteur primaire.
[Fig. 4] la figure 4 illustre un exemple dans lequel le système radar comprend une première antenne directive, dite « antenne émettrice », et une seconde antenne directive, dite « antenne réceptrice ».
[Fig. 5] la figure 5 illustre un exemple de pièce de carrosserie comportant un système radar selon l'invention.
[Fig. 6] la figure 6 illustre schématiquement, en section et vue de dessus, un exemple de pièce de carrosserie (moitié gauche d'un pare-chocs) comportant un système radar selon l'invention, dans laquelle l'unité électronique est fixée à la même pièce de carrosserie que le boitier, au moyen d'un élément amortissant, déformable ou fusible.
[Fig. 7] la figure 7 illustre schématiquement, en section et vue de dessus, un exemple de pièce de carrosserie (moitié gauche d'un pare-chocs) comportant un système radar selon l'invention, dans laquelle l'unité électronique est fixée à la même pièce de carrosserie que le boitier, mais sur une zone déportée latéralement par rapport à la zone de fixation du boitier.
[Fig. 8] la figure 8 illustre schématiquement, en section et vue de dessus, un exemple de pièce de carrosserie (moitié gauche d'un pare-chocs) comportant un système radar selon l'invention, dans laquelle l'unité électronique est fixée à la même pièce de carrosserie que le boitier, mais sur une partie de pièce de carrosserie située en retrait (vers l'arrière) par rapport à la zone de fixation du boitier.
[Fig. 9] la figure 9 illustre un exemple de pièce de carrosserie comportant un système radar selon l'invention, dans laquelle le boitier est fixé sur une première pièce, une pièce de carrosserie (par exemple un pare-chocs), et l'unité électronique est fixée sur une seconde pièce (pièce de carrosserie différente, pièce structurelle, bloc optique, ...).

### Description détaillée

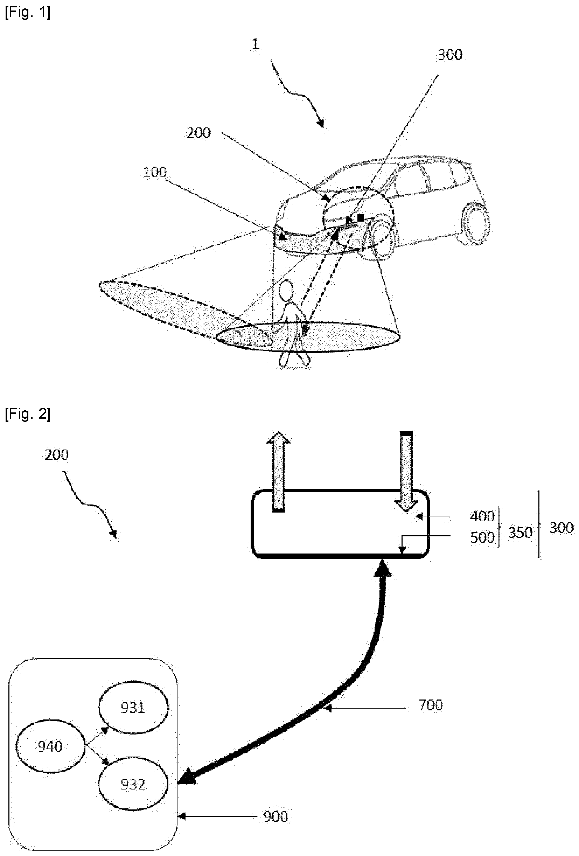

Nous nous référons à la figure 1 qui illustre un exemple de véhicule automobile 1 équipé d'un exemple de système radar 200 selon l'invention, avec au moins une antenne directive 300.

La figure 2 illustre en détail un exemple de système radar 200 pour véhicule à moteur 1 selon l'invention.

Le système radar 200 comprend au moins :
- une antenne directive 300;
- une unité électronique 900 située en dehors et à distance de l'antenne directive 300;
- au moins un guide d'ondes 700 pour propager des ondes électromagnétiques entre l'antenne directive 300 et l'unité électronique 900.

On entend par guide d'ondes 700 un moyen de guider des ondes d'une zone à une autre, dans un sens ou dans les deux sens. Un guide d'ondes 700 peut donc être un dispositif de guidage d'onde ou un ensemble de dispositifs de guidage d'onde.

L'antenne directive 300 est adaptée à imager des objets 50 dans un espace situé à la périphérie du véhicule 1 (figure 1). Elle est constituée d'un boitier 350, qui constitue l'enveloppe physique de l'antenne directive 300. Le boitier 350 représente une enveloppe mécanique et de protection à l'environnement, et comporte avantageusement des moyens de fixation sur une paroi d'une pièce de carrosserie.

Ce boitier 350 comporte un volume intérieur formant une cavité réfléchissante 400 pour ondes électromagnétiques. Une cavité réfléchissante est une cavité électromagnétique 400 dans laquelle une onde électromagnétique est réfléchie sur les parois de la cavité. Pour ce faire, la cavité réfléchissante 400 est délimitée par une couche de matériau réfléchissant apte à réfléchir des ondes électromagnétiques à l'intérieur de la cavité 400.

Le volume intérieur du boitier 350 comporte une métasurface 500, comportant une surface adaptable configurée pour réfléchir des ondes électromagnétiques dans une direction privilégiée. La cavité réfléchissante entoure ainsi de façon étanche (aux ondes) la métasurface 500.

À noter que le système radar 200 peut comporter plusieurs guides d'onde, notamment un guide d'onde pour l'émission et un guide d'onde pour la réception d'ondes électromagnétiques.

Le système radar 200 comprend également une unité électronique 900 située en dehors et à distance du boitier 350. Par « à distance » on entend à une distance permettant un positionnement de l'unité électronique 900 dans une zone de moindre choc que l'antenne directive 20.

Lors d'un choc, les déformations occasionnant des dégâts sur un véhicule se mesurent à partir de la face extérieure du pare-chocs et suivant une côte longitudinale appelée intrusion. Ces intrusions dépendent des véhicules et peuvent être évaluées par des calculs de simulation ou des essais physique avec un impacteur et des conditions de choc bien définies, notamment en masse, vitesse, direction.

L'unité électronique est dite positionnée dans une zone soumise aux chocs lorsqu'elle est située à l'intérieur du volume d'intrusion, c'est-à-dire à une distance de la face extérieure du pare-chocs inférieure à la côte d'intrusion. Pour positionner l'unité électronique dans une zone moins soumise aux chocs, par exemple dans le cas d'un pare-chocs avant, on la positionne au-dessus d'un plan horizontal passant par le point le plus haut de la poutre de chocs et de son absorbeur ou en dessous d'un plan horizontal passant par le point le plus bas de la poutre de chocs et de son absorbeur.

Préférentiellement, dans le cas d'un pare-chocs avant, on positionne l'unité électronique au-delà du volume d'intrusion c'est-à-dire généralement au-delà de 50mm en arrière de la peau de pare-chocs pour les véhicules légers et au-delà de 100mm pour les véhicules plus lourds pour la préserver en cas de choc parking à 4km/h (régi par l'ECE42). Afin de préserver cette unité électronique en cas de choc à 16km/h (autrement appelé choc réparabilité) on pourra la positionner 200mm en retrait de la peau de pare-chocs et en arrière des platines arrières de la poutre de chocs.

L'unité électronique 900 comprend un émetteur primaire 931 et un récepteur primaire 932 d'ondes électromagnétiques. De préférence, l'unité électronique comporte également une électronique de contrôle 940 des émetteurs 931 et récepteurs 932 primaires, une électronique de commande de la métasurface 500, des connecteurs pour guide d'onde, des connecteurs permettant de relier l'électronique de commande de la métasurface 500 et la métasurface 500, une alimentation électrique et un boitier formant enveloppe étanche à l'environnement (eau, poussière, ...) des éléments électroniques.

L'unité électronique 900 est configurée pour opérer à des fréquences supérieures à 60GHz. Selon un mode de réalisation, l'unité électronique 900 est configurée pour opérer à des fréquences comprises entre 75 et 80GHz, de préférence à 77GHz. Selon un autre mode de réalisation l'unité électronique 900 est configurée pour opérer à des fréquences comprises entre 120-160GHz, de préférence à 140GHz.

Enfin, le système radar 200 comprend également au moins un guide d'ondes 700 pour propager des ondes électromagnétiques entre l'émetteur primaire 931 et la cavité 400 et entre la cavité 400 et le récepteur primaire 932.

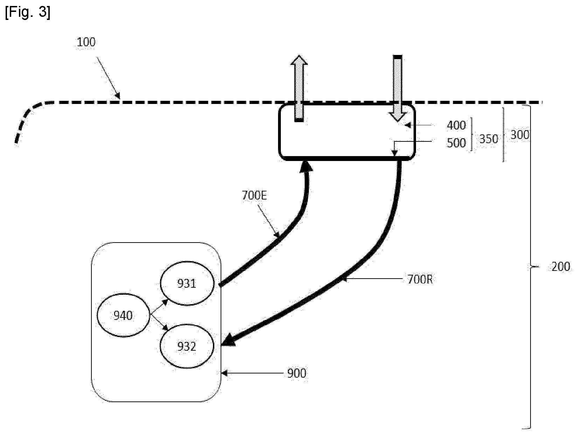

Sur la figure 3, le système radar 200 comprend un premier guide d'ondes 700E pour propager des ondes électromagnétiques entre l'émetteur primaire 931 et la cavité 400, et un second guide d'ondes 700R pour propager des ondes électromagnétiques entre la cavité 400 et le récepteur primaire 932.

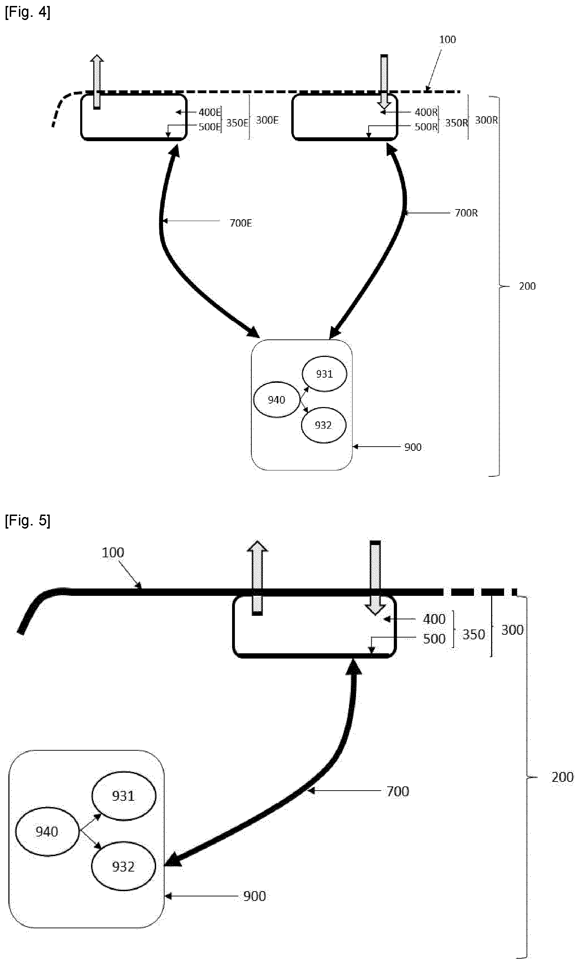

Sur la figure 4, le système radar 200 comprend :
- une première antenne directive 300E, dite « antenne émettrice », formant un élément émetteur constitué d'un boitier 350E formant une cavité 400E munie d'une métasurface 500E configurée pour émettre des ondes électromagnétiques issue d'un premier guide d'ondes (700E) dans une direction privilégiée vers l'extérieur du boitier 350E (vers l'extérieur ou la périphérie du véhicule) ;
- une seconde antenne directive 300R, dite « antenne réceptrice », formant un élément récepteur constitué d'un boitier 350R formant une cavité 400R munie d'une métasurface 500R configurée pour recevoir des ondes électromagnétiques de retour (depuis l'extérieur ou la périphérie du véhicule, après réflexion sur un obstacle) dans une direction privilégiée vers le second guide d'ondes 700R.

Selon ce mode de réalisation, le premier guide d'ondes 700E propage des ondes électromagnétiques entre l'émetteur primaire 931 et la cavité 400E de la première antenne directive 300E, et le second guide d'ondes 700R pour propage des ondes électromagnétiques entre la cavité 400R de la seconde antenne directive 300R et le récepteur primaire 932.

### Le guide d'onde 700

Selon un mode de réalisation, le guide d'onde 700 est monté fixe sur le boitier 350 et de façon amovible sur l'unité électronique 900.

Selon un autre mode de réalisation, le guide d'onde est monté fixe sur l'unité électronique 900 et de façon amovible sur le boitier 350. Le guide d'onde est ainsi monté déjà raccordé aux antennes intégrées à la pièce de carrosserie, l'autre extrémité à raccorder au boitier 350 déporté.

Selon un autre mode de réalisation, le guide d'onde est monté amovible sur l'unité électronique 900 et de façon amovible sur le boitier 350.

De façon avantageuse le guide d'onde 700 comporte une connectique amovible, de façon à être connectable au boitier antenne et/ou à l'unité électronique, et à être déconnectable du boitier antenne et/ou de l'unité électronique. Ceci facilite l'assemblage général et a fortiori le montage sur des pièces distantes, mais aussi la réparabilité du système radar 200.

La connexion peut se faire en surface externe (surface opposée à la cavité réfléchissante 400) du boitier 350 ou au travers de la paroi de la cavité réfléchissante 400. Selon cette dernière variante, la connexion peut se faire au connecteur de la métasurface 500. Dans ce cas, et selon un mode de réalisation avantageux, le guide d'onde 700 est combiné avec un fil électrique de commande pour réaliser la commande de la métasurface 500, formant un faisceau. Le fil électrique fait la liaison entre la métasurface 500 et l'électronique de commande de la métasurface 500. Ainsi, lors du montage (et raccordement connectiques) sur un véhicule, une seule opération est nécessaire pour monter le guide d'onde et le fil de commande. Selon une variante, chaque extrémité du guide d'onde et du fil de commande sont reliées à un même connecteur, permettant ainsi une connexion simultanée du guide d'onde 700 et du fil de commande.

De façon avantageuse, le guide d'onde 700 est fixé/maintenu sur la face interne de la paroi (panneau carrosserie) de la pièce de carrosserie sur laquelle est installé le boitier 350, afin d'éviter des mouvements et des vibrations du guide d'onde 700, et afin d'éviter des sollicitations mécaniques sur les connectiques.

Le guide d'onde peut être rigide, mais selon un mode de réalisation préférentiel le guide d'onde est flexible, permettant un assemblage sur véhicule facilité, car le guide d'onde peut alors être glissé dans différents recoins et suivre le galbe des pièces. De plus, un guide d'onde flexible permet d'accroitre la robustesse aux chocs lors de chocs.

### La métasurface 500

La métasurface comporte une surface adaptable apte à réfléchir dans une direction donnée (et de façon contrôlée) l'onde électromagnétique émise par le guide d'onde 700E dans la cavité, et réciproquement apte à réfléchir l'onde électromagnétique provenant de l'extérieur du boitier 350 vers le guide d'onde 700R. Une telle métasurface est décrite par exemple dans le document suivant : FR 3093961.

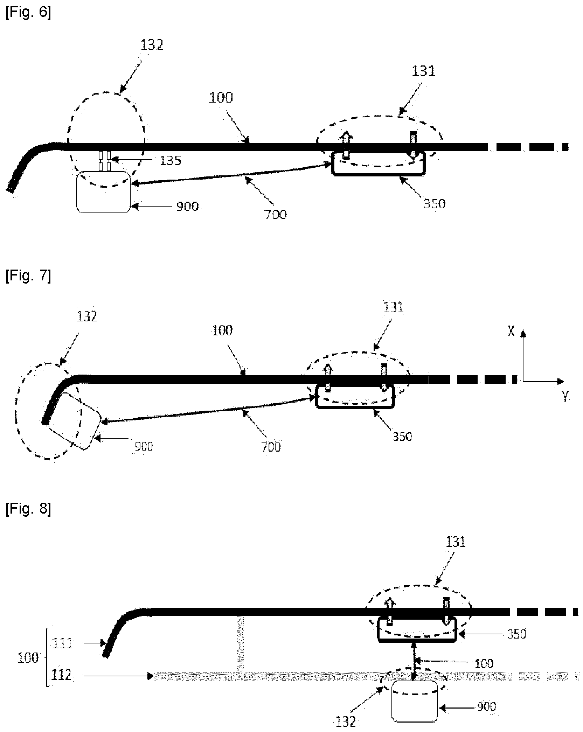

L'invention concerne également une pièce de carrosserie 100 (figure 6) comportant un système radar 200 selon l'invention. Comme illustré sur la figure 6, le boitier 350 est rapporté sur une première zone 131 de la pièce de carrosserie 100, et l'unité électronique 900 est rapportée sur une seconde zone 132 de la pièce de carrosserie 100.

Cette implantation sur une même pièce de carrosserie permet d'intégrer le système radar 200 complet sur une seule et même pièce.

La première zone 131, portant l'antenne directive 300, doit se situer au plus proche de la surface visible de la pièce montée sur un véhicule, afin qu'il y ait le moins de matière entre l'antenne directive et l'espace à imager, pour des raisons de bonne transmission des ondes électromagnétiques. Par exemple, lorsque la pièce de carrosserie est un pare-chocs en plastique, l'antenne directive doit être placée juste derrière la peau. Ce type de zone est donc par nature exposée aux chocs.

De plus, la première zone 131, portant l'antenne directive 300, doit se situer en regard de la zone à imager par le système radar 200. Ce type de zone est également par nature exposée aux chocs.

Selon un premier mode de réalisation, l'unité électronique 900 est rapportée sur un élément amortissant, déformable ou fusible 135 (voir figure 6) au niveau de la seconde zone 132 de la pièce de carrosserie 100. Par exemple, l'unité électronique 900 peut être montée sur des pattes à déformation programmée et rompables en cas de chocs. Ainsi, en cas de choc sur la pièce de carrosserie 100, l'élément fusible absorbe une partie du choc et se rompt évitant de transmettre des efforts à l'unité électronique 900.

Selon un second mode de réalisation, afin de protéger l'unité électronique 900 en cas de choc subi par la pièce de carrosserie, l'unité électronique 900 est rapportée sur une seconde zone 132 judicieusement choisie afin que cette zone soit moins exposée aux chocs, c'est-à-dire soumise à moins d'effort en cas de chocs subis par la pièce de carrosserie 100. Une telle zone peut être déterminée par un expert en fonction de la place disponible restante (fonction des autres composants situés en face interne ou en regard de la face interne de la pièce de carrosserie), en fonction de normes connues relatives notamment aux chocs, et en fonction des cahiers des charges des constructeurs. Cette seconde zone 132 peut ainsi être :
- une zone déportée, par exemple verticalement par rapport à la première zone 131, c'est-à-dire, plus basse ou plus haute que l'antenne directive 300 une fois montée sur un véhicule. La zone déportée peut également être une zone déportée latéralement (figure 7, sur laquelle l'axe X est l'axe longitudinal du véhicule et l'axe Y est l'axe transversal), relativement au plan médian du véhicule (communément nommé « Y0 »), par rapport à la première zone 131. La zone déportée peut également être une zone déportée à la fois latéralement et verticalement.
- une zone plus en retrait que la première zone 131 d'une face visible de la pièce de carrosserie 100. En d'autres termes, la zone 132 est plus en arrière que la zone 131 par rapport à l'avant du véhicule 1 (figure 8). Par exemple, lorsque la pièce 100 est un pare-chocs, la première zone sera de préférence située juste derrière la peau 111 du pare-chocs (au plus proche de l'extérieur mais non visible de l'extérieur lorsque le pare-chocs est monté sur le véhicule), et la seconde zone 112 sera située à distance de la face interne.
- une zone située sur ou derrière un élément du véhicule, par exemple un bloc optique, ou un élément structurel, tel qu'une poutre ou un longeron, un support de radiateur (face avant technique), ...

Ainsi, le boitier 350 et l'unité électronique 900 peuvent être positionnés l'un de l'autre à une distance comprise entre 5 cm et 20 cm, voire supérieure à 20cm.

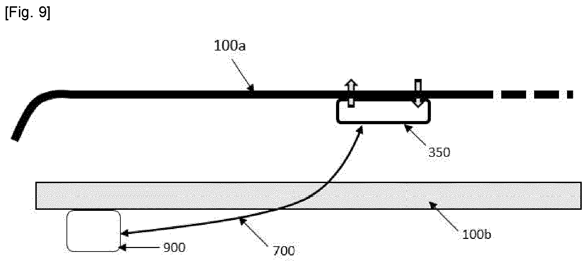

Selon un mode d'assemblage (figure 9), l'unité électronique 900 est prémontée en attente de façon temporaire sur la pièce de carrosserie 100 où est fixée le boitier 350, qui est livrée sur ligne de production du véhicule. Lorsque la pièce 100 est montée sur le véhicule, l'unité électronique 900 est détachée de sa position de livraison de la pièce 100, puis l'unité électronique 900 est déplacée (avec le guide d'onde déjà raccordé, ou pas...) et fixée sur la seconde zone 132 située sur le véhicule.

Selon un exemple de réalisation, la pièce de carrosserie 100 est un pare-chocs avant ou arrière.

L'invention concerne également un ensemble de pièces véhicule 100a, 100b (figure 9), qui comprend un système radar 200 selon l'invention. Le boitier 350 est rapporté sur une première pièce de carrosserie 100a, et l'unité électronique 900 est rapportée sur une seconde pièce 100b (pièce de carrosserie ou tout autre type de pièce, telle qu'une pièce structurelle), la seconde pièce 100b étant une pièce moins exposée aux chocs que la première pièce 100a, c'est-à-dire qu'elle est soumise à moins d'effort en cas de chocs.

Cette implantation sur deux pièces différentes permet de protéger davantage l'unité électronique en choisissant judicieusement le seconde pièce 100b.

La première pièce de carrosserie 100a portant l'antenne directive 300, doit se situer en regard de la zone à imager par le système radar 200. Cette pièce est donc par nature exposée aux chocs.

Selon un mode de réalisation, la seconde pièce 100b est choisie parmi les pièces suivantes :
- renfort de crosse, grille d'entrée d'air, convergent inférieur, armature de choc, absorbeur, guide d'air d'un radiateur ... ;
- face avant technique (FAT), par exemple sur une traverse supérieure ou sur autre partie du cadre, support d'aile, coffre avant...

Selon un mode de réalisation, l'ensemble de pièces 100a, 100b comporte plusieurs pièces : une pièce porte l'unité électronique 900, et chaque autre pièce porte au moins une antenne directive 300. Cette implantation permet ainsi de mutualiser l'unité électronique avec plusieurs antennes directives 300.

L'invention concerne également un véhicule à moteur 1 comprenant un système radar 200 selon l'invention, comprenant une pièce de carrosserie 100 selon l'invention, ou comprenant un ensemble de pièces de véhicule 100a, 100b selon l'invention.

L'invention n'est pas limitée aux modes de réalisation présentés et d'autres modes de réalisation apparaîtront clairement à l'homme du métier. Notamment l'invention a été décrite en référence à un pare-chocs, mais la pièce de carrosserie peut être toute pièce de carrosserie telle qu'une porte latérale, une aile, un hayon, un pare-chocs arrière, ...

### Liste de références

1 : véhicule à moteur
50 : objet à détecter dans un espace situé à la périphérie du véhicule 1
100 : pièce de carrosserie d'un véhicule à moteur
111 : composant de la pièce 100 visible depuis l'extérieur du véhicule lorsque la pièce est montée (peau, grille, plastron, enjoliveur, radome, ...)
112 : composant de la pièce 100 caché depuis l'extérieur du véhicule lorsque la pièce est montée (renfort de crosse, support de feu, absorbeur mousse, convergent inférieur ...)
131 : première zone de la pièce de carrosserie 100, portant le boitier 350
132 : seconde zone de la pièce de carrosserie 100, portant l'unité électronique 900
135 : élément fusible ou absorbeur de choc permettant de fixer l'unité électronique 900 sur la pièce de carrosserie 100
100a, 100b : ensemble d'une première pièce de carrosserie 100a, et d'une seconde pièce 100b
200 : système radar
300 : antenne directive
350 : boitier formant l'antenne directive 300 (350E, 350R)
400 : cavité réfléchissante pour ondes électromagnétiques formée par le volume intérieur du boitier 350
500 : métasurface positionnée dans le volume intérieur du boitier 350
300E : antenne directive émettrice, comportant un boitier 350E, une cavité réfléchissante 400E, une métasurface 500E)
300R : antenne directive réceptrice, comportant un boitier 350R, une cavité réfléchissante 400R, une métasurface 500R
900 : unité électronique
931 : émetteur primaire de l'unité électronique 900
932 : récepteur primaire de l'unité électronique 900
940 : électronique de contrôle de l'émetteur 931 et du récepteur 932
700 : guide d'ondes pour propager des ondes électromagnétiques
700E : premier guide d'ondes pour propager des ondes électromagnétiques entre l'émetteur primaire 931 et la cavité 400
700R : second guide d'ondes pour propager des ondes électromagnétiques entre la cavité 400 et le récepteur primaire 932.

## Revendications

1. Système radar (200) pour véhicule à moteur (1) comprenant :
- au moins une antenne directive (300) constituée d'un boitier (350) comportant un volume intérieur formant une cavité réfléchissante (400) pour ondes électromagnétiques, le volume intérieur comportant une métasurface (500) configurée pour transmettre des ondes électromagnétiques avec une direction privilégiée ;
- une unité électronique (900) située en dehors et à distance du boitier (350), comprenant un émetteur primaire (931) et un récepteur primaire (932) d'ondes électromagnétiques ;
- au moins un guide d'ondes (700) pour propager des ondes électromagnétiques entre l'émetteur primaire (931) et la cavité (400) et entre la cavité (400) et le récepteur primaire (932),
le système radar comportant :
- un premier guide d'ondes (700E) pour propager des ondes électromagnétiques entre l'émetteur primaire (931) et la cavité (400) ; et
- un second guide d'ondes (700R) pour propager des ondes électromagnétiques entre la cavité (400) et le récepteur primaire (932).
**caractérisé en ce qu'**il comprend :
- au moins une première antenne directive (300E) formant un élément émetteur constitué d'un boitier (350E) formant une cavité (400E) munie d'une métasurface (500E) configurée pour réfléchir des ondes électromagnétiques issue d'un premier guide d'ondes (700E) dans une direction privilégiée vers l'extérieur du boitier (350E) ;
- au moins une seconde antenne directive (300R) formant un élément récepteur constitué d'un boitier (350R) formant une cavité (400R) munie d'une métasurface (500R) configurée pour réfléchir des ondes électromagnétiques (de retour) dans une direction privilégiée vers le second guide d'ondes (700R).

2. Système radar (200) selon la revendication précédente, dans lequel l'unité électronique (900) comporte une électronique de contrôle (940) des émetteurs (931) et récepteurs (932) primaires, et une électronique de commande de la métasurface (500).

3. Système radar (200) selon l'une des revendications précédentes, dans lequel le guide d'onde (700) est monté fixe sur le boitier (350) et de façon amovible sur l'unité électronique (900), ou le guide d'onde (700) est monté fixe sur l'unité électronique (900) et de façon amovible sur le boitier (350).

4. Système radar (200) selon l'une des revendications précédentes, dans lequel l'unité électronique (900) est configurée pour opérer à des fréquences supérieures à 60GHz, notamment entre 75 et 80GHz, de préférence à 77GHz.

5. Pièce de carrosserie (100) **caractérisée en ce qu'**elle comporte un système radar (200) selon l'une des revendications précédentes, le boitier (350) étant rapporté sur une première zone (131) de la pièce de carrosserie (100), et l'unité électronique (900) étant rapportée sur une seconde zone (132) de la pièce de carrosserie (100).

6. Pièce de carrosserie (100) selon la revendication précédente, dans laquelle la seconde zone (132) est une zone moins exposée aux chocs que la première zone (131) en cas de choc sur la pièce de carrosserie (100), et de préférence dans une zone hors du volume d'intrusion aux chocs.

7. Pièce de carrosserie (100) selon la revendication précédente, dans laquelle la seconde zone (132) est située sur un élément structurel, tel qu'une poutre ou un longeron.

8. Pièce de carrosserie selon l'une des revendication 5 à 7, dans laquelle la seconde zone (132) est une zone déportée latéralement et/ou une zone déportée verticalement par rapport à la première zone (131), et/ou une zone plus en retrait que la première zone (131).

9. Pièce de carrosserie (100) selon l'une des revendication 5 à 8, dans laquelle le boitier ( 350) est rapporté sur une première zone (131) de la pièce de carrosserie (100), et l'unité électronique (900) est rapportée sur un élément amortissant, déformable ou fusible (135) au niveau de la seconde zone (132) de la pièce de carrosserie (100).

10. Pièce de carrosserie (100) selon l'une des revendication 5 à 9, dans laquelle le boitier (350) et l'unité électronique (900) sont à une distance comprise entre 5 cm et 20 cm.

11. Ensemble de pièces de véhicule (100a, 100b), **caractérisé en ce qu'**il comprend un système radar (200) selon l'une des revendications 1 à 4, et **en ce que** le boitier (350) est rapporté sur une première pièce de carrosserie (100a), et l'unité électronique (900) est rapportée sur une seconde pièce (100b), la seconde pièce (100b) étant moins exposée aux chocs que la première pièce (100a) en cas de choc sur la première pièce de carrosserie (100a), et de préférence dans une pièce hors du volume d'intrusion aux chocs.

12. Ensemble selon la revendication précédente, dans lequel la seconde pièce (100b) est située derrière un élément structurel, ou constitue une pièce structurelle.

13. Ensemble selon l'une des revendications 11 et 12, dans lequel la seconde pièce (100b) est choisie parmi les pièces suivantes :
- renfort de crosse, grille d'entrée d'air, convergent inférieur, armature de choc, absorbeur, guide d'air d'un radiateur ;
- face avant technique (FAT), par exemple sur une traverse supérieure ou sur autre partie du cadre, support d'aile, coffre avant.

14. Ensemble selon l'une des revendications 11 à 13, comportant une pièce portant l'unité électronique (900), et au moins deux autres pièces portant chacune au moins un boitier (350) connecté à l'unité électronique (900).

15. Véhicule à moteur (1) comprenant un système radar (200) selon l'une des revendications 1 à 4.

16. Véhicule à moteur (1) comprenant une pièce de carrosserie (100) selon l'une des revendications 5 à 10.

17. Véhicule à moteur (1) comprenant un ensemble de pièces de véhicule (100a, 100b) selon l'une des revendications 11 à 14.

## Patentansprüche

1. Radarsystem (200) für ein Kraftfahrzeug (1), aufweisend:
- mindestens eine Richtantenne (300), bestehend aus einem Gehäuse (350) mit einem Innenraum, der einen reflektierenden Hohlraum (400) für elektromagnetische Wellen bildet, wobei der Innenraum eine Metafläche (500) aufweist, die dafür ausgelegt ist, elektromagnetische Wellen in einer bevorzugten Richtung zu übertragen;
- eine elektronische Einheit (900), die außerhalb und in einem Abstand zum Gehäuse (350) angeordnet ist und einen Primärsender (931) sowie einen Primärempfänger (932) für elektromagnetische Wellen aufweist;
- mindestens einen Wellenleiter (700) zur Ausbreitung elektromagnetischer Wellen zwischen dem Primärsender (931) und dem Hohlraum (400) sowie zwischen dem Hohlraum (400) und dem Primärempfänger (932),
wobei das Radarsystem aufweist:
- einen ersten Wellenleiter (700E) zur Ausbreitung elektromagnetischer Wellen zwischen dem Primärsender (931) und dem Hohlraum (400); und
- einen zweiten Wellenleiter (700R) zur Ausbreitung elektromagnetischer Wellen zwischen dem Hohlraum (400) und dem Primärempfänger (932),
**dadurch gekennzeichnet, dass** es aufweist:
- mindestens eine erste Richtantenne (300E), die ein Sendeelement bildet, bestehend aus einem Gehäuse (350E), das einen Hohlraum (400E) bildet, der mit einer Metafläche (500E) versehen ist, die dafür ausgelegt ist, elektromagnetische Wellen, die von einem ersten Wellenleiter (700E) ausgehen, in einer bevorzugten Richtung nach außen aus dem Gehäuse (350E) zu reflektieren;
- mindestens eine zweite Richtantenne (300R), die ein Empfangselement bildet, bestehend aus einem Gehäuse (350R), das einen Hohlraum (400R) bildet, der mit einer Metafläche (500R) versehen ist, die dafür ausgelegt ist, (rücklaufende) elektromagnetische Wellen in einer bevorzugten Richtung zum zweiten Wellenleiter (700R) zu reflektieren.

2. Radarsystem (200) nach dem vorstehenden Anspruch, wobei die Elektronikeinheit (900) eine Steuerelektronik (940) für die Primärsender (931) und Primärempfänger (932) sowie eine Ansteuerelektronik für die Metafläche (500) aufweist.

3. Radarsystem (200) nach einem der vorstehenden Ansprüche, wobei der Wellenleiter (700) fest am Gehäuse (350) und lösbar an der Elektronikeinheit (900) montiert ist, oder der Wellenleiter (700) fest an der Elektronikeinheit (900) und lösbar am Gehäuse (350) montiert ist.

4. Radarsystem (200) nach einem der vorstehenden Ansprüche, wobei die Elektronikeinheit (900) dafür ausgelegt ist, bei Frequenzen über 60 GHz, insbesondere zwischen 75 und 80 GHz, vorzugsweise bei 77 GHz, zu arbeiten.

5. Karosserieteil (100), **dadurch gekennzeichnet, dass** es ein Radarsystem (200) gemäß einem der vorstehenden Ansprüche aufweist, wobei das Gehäuse (350) an einem ersten Bereich (131) des Karosserieteils (100) angebracht ist, und die Elektronikeinheit (900) an einem zweiten Bereich (132) des Karosserieteils (100) angeordnet ist.

6. Karosserieteil (100) nach dem vorstehenden Anspruch, wobei der zweite Bereich (132) ein Bereich ist, der im Falle eines Aufpralls auf das Karosserieteil (100) weniger stoßbelastet ist als der erste Bereich (131), und vorzugsweise in einem Bereich außerhalb des Aufprall-Eindringvolumens liegt.

7. Karosserieteil (100) nach dem vorstehenden Anspruch, wobei der zweite Bereich (132) an einem Strukturelement, wie beispielsweise einem Träger oder einem Längsträger, angeordnet ist.

8. Karosserieteil gemäß einem der Ansprüche 5 bis 7, wobei der zweite Bereich (132) ein gegenüber dem ersten Bereich (131) seitlich und/oder vertikal versetzter Bereich und/oder ein Bereich ist, der weiter zurückgesetzt ist als der erste Bereich (131).

9. Karosserieteil (100) nach einem der Ansprüche 5 bis 8, wobei das Gehäuse (350) an einem ersten Bereich (131) des Karosserieteils (100) angeordnet ist, und die Elektronikeinheit (900) im Bereich des zweiten Bereichs (132) des Karosserieteils (100) an einem dämpfenden, verformbaren oder schmelzbaren Element (135) angeordnet ist.

10. Karosserieteil (100) gemäß einem der Ansprüche 5 bis 9, wobei das Gehäuse (350) und die Elektronikeinheit (900) einen Abstand von 5 cm bis 20 cm voneinander aufweisen.

11. Anordnung von Fahrzeugteilen (100a, 100b), **dadurch gekennzeichnet, dass** sie ein Radarsystem (200) gemäß einem der Ansprüche 1 bis 4 aufweist und dass das Gehäuse (350) an einem ersten Karosserieteil (100a) angebracht ist, und die Elektronikeinheit (900) an einem zweiten Teil (100b) angebracht ist, wobei das zweite Teil (100b) im Falle eines Aufpralls auf das erste Karosserieteil (100a) weniger stoßgefährdet ist als das erste Karosserieteil (100a) und vorzugsweise in einem Bereich außerhalb des Aufprall-Eindringvolumens liegt.

12. Anordnung nach dem vorstehenden Anspruch, wobei das zweite Teil (100b) hinter einem Strukturelement angeordnet ist oder ein Strukturelement bildet.

13. Anordnung nach einem der Ansprüche 11 und 12, wobei das zweite Teil (100b) aus den folgenden Teilen ausgewählt ist:
- Schwellerverstärkung, Lufteinlassgitter, unterer Konvergent, Stoßfängerrahmen, Aufprallabsorber, Luftleitblech eines Kühlers;
- technische Frontblende (FAT), beispielsweise an einem oberen Querträger oder an einem anderen Teil des Rahmens, Kotflügelhalterung, vorderer Kofferraum.

14. Anordnung nach einem der Ansprüche 11 bis 13, aufweisend ein Teil, das die Elektronikeinheit (900) trägt, und mindestens zwei weitere Teile, die jeweils mindestens ein mit der Elektronikeinheit (900) verbundenes Gehäuse (350) tragen.

15. Kraftfahrzeug (1) mit einem Radarsystem (200) gemäß einem der Ansprüche 1 bis 4.

16. Kraftfahrzeug (1) mit einem Karosserieteil (100) gemäß einem der Ansprüche 5 bis 10.

17. Kraftfahrzeug (1) mit einer Anordnung von Fahrzeugteilen (100a, 100b) gemäß einem der Ansprüche 11 bis 14.

## Claims

1. Radar system (200) for a motor vehicle (1), comprising:
- at least one directional antenna (300) comprising a housing (350) having an internal volume forming a reflective cavity (400) for electromagnetic waves, the internal volume comprising a metasurface (500) configured to transmit electromagnetic waves in a preferred direction;
- an electronic unit (900) located outside and at a distance from the housing (350), comprising a primary transmitter (931) and a primary receiver (932) for electromagnetic waves;
- at least one waveguide (700) for propagating electromagnetic waves between the primary transmitter (931) and the cavity (400) and between the cavity (400) and the primary receiver (932),
the radar system comprising:
- a first waveguide (700E) for propagating electromagnetic waves between the primary transmitter (931) and the cavity (400); and
- a second waveguide (700R) for propagating electromagnetic waves between the cavity (400) and the primary receiver (932).
**characterised in that** it comprises:
- at least one first directional antenna (300E) forming a transmitter element comprising a housing (350E) forming a cavity (400E) provided with a metasurface (500E) configured to reflect electromagnetic waves from a first waveguide (700E) in a preferred direction towards the exterior of the housing (350E);
- at least one second directional antenna (300R) forming a receiving element comprising a housing (350R) forming a cavity (400R) fitted with a metasurface (500R) configured to reflect electromagnetic waves (return waves) in a preferred direction towards the second waveguide (700R).

2. Radar system (200) according to the preceding claim, in which the electronic unit (900) comprises control electronics (940) for the primary transmitters (931) and receivers (932), and control electronics for the metasurface (500).

3. Radar system (200) according to one of the preceding claims, in which the waveguide (700) is fixedly mounted on the housing (350) and removably mounted on the electronic unit (900), or the waveguide (700) is fixedly mounted on the electronic unit (900) and removably mounted on the housing (350).

4. Radar system (200) according to one of the preceding claims, wherein the electronic unit (900) is configured to operate at frequencies above 60 GHz, in particular between 75 and 80 GHz, preferably at 77 GHz.

5. Body panel (100) **characterised in that** it comprises a radar system (200) according to one of the preceding claims, the housing (350) being mounted on a first area (131) of the body panel (100), and the electronic unit (900) being mounted on a second area (132) of the body panel (100).

6. Body panel (100) according to the preceding claim, in which the second area (132) is an area less exposed to impact than the first area (131) in the event of an impact on the body panel (100), and preferably in an area outside the impact intrusion zone.

7. Body panel (100) according to the preceding claim, wherein the second area (132) is situated on a structural element, such as a beam or a side member.

8. Body panel according to any one of claims 5 to 7, in which the second zone (132) is a zone offset laterally and/or vertically relative to the first zone (131), and/or a zone set further back than the first zone (131).

9. Body panel (100) according to any one of claims 5 to 8, wherein the housing (350) is mounted on a first region (131) of the body panel (100), and the electronic unit (900) is mounted on a damping, deformable or fusible element (135) at the second area (132) of the body panel (100).

10. Body panel (100) according to any one of claims 5 to 9, in which the housing (350) and the electronic unit (900) are at a distance of between 5 cm and 20 cm.

11. Assembly of vehicle components (100a, 100b), **characterised in that** it comprises a radar system (200) according to one of claims 1 to 4, and **in that** the housing (350) is mounted on a first body panel (100a), and the electronic unit (900) is mounted on a second component (100b), the second component (100b) being less exposed to impact than the first component (100a) in the event of an impact on the first body component (100a), and preferably in a component outside the impact intrusion zone.

12. Assembly according to the preceding claim, in which the second component (100b) is situated behind a structural element, or constitutes a structural component.

13. Assembly according to one of claims 11 and 12, wherein the second component (100b) is selected from the following components:
- a cross-member reinforcement, an air intake grille, a lower convergent section, a crash frame, an energy absorber, or a radiator air guide;
- technical front panel (FAT), for example on an upper cross-member or on another part of the frame, wing support, front boot.

14. Assembly according to any one of claims 11 to 13, comprising a component carrying the electronic unit (900), and at least two further components, each carrying at least one housing (350) connected to the electronic unit (900).

15. Motor vehicle (1) comprising a radar system (200) according to one of claims 1 to 4.

16. Motor vehicle (1) comprising a body part (100) according to one of claims 5 to 10.

17. Motor vehicle (1) comprising an assembly of vehicle components (100a, 100b) according to one of claims 11 to 14.
